# FASCICULE DE BREVET EUROPEEN

(11) **EP 1 767 829 B1**
(45) Date de publication et mention de la délivrance du brevet: **24.07.2013**
(21) Numéro de dépôt: 06300960.9
(22) Date de dépôt: 19.09.2006
(51) Int. Cl.: F16H 61/28

(54) **Boîte de vitesses comprenant un actionneur pourvu d'un capteur d'effort**
Getriebe enthaltend einen mit einem Kraftsensor ausgestatteten Aktuator
Gearbox comprising an actuator with a force sensor

(30) Priorité: 26.09.2005 FR 0509813
(43) Date de publication de la demande: 28.03.2007
(73) Titulaire: PEUGEOT CITROËN AUTOMOBILES S.A., 78140 Vélizy Villacoublay (FR)
(72) Inventeur: Schaeffer, Eric, 92250, La Garenne-Colombes (FR)
(74) Mandataire: Gendraud, Pierre

(56) Documents cités:
- EP-A- 0 310 387
- EP-A- 1 271 010
- DE-A1- 19 709 419
- FR-A- 2 787 856
- US-A1- 2004 063 541
- US-B1- 6 705 175

## Description

L'invention concerne une boîte de vitesses manuelle pilotée, comprenant un synchroniseur incluant un manchon mobile, un actionneur apte à déplacer ce manchon mobile pour engager un rapport, et un capteur de position de cet actionneur.

Une telle boîte de vitesses comprend généralement un arbre primaire lié en rotation à un arbre de sortie du moteur du véhicule par un embrayage, et un arbre secondaire lié en rotation à un arbre de transmission aux roues motrices du véhicule.

Selon une architecture connue, l'arbre primaire porte plusieurs pignons primaires qui sont rigidement solidaires de cet arbre primaire, et l'arbre secondaire porte plusieurs pignons secondaires et plusieurs synchroniseurs.

Chaque pignon secondaire est en permanence engrené dans un pignon primaire correspondant, chaque pignon secondaire étant monté rotatif sur l'arbre secondaire tout en pouvant être solidarisé en rotation à cet arbre secondaire par le synchroniseur qui lui est associé. Chaque paire comprenant un pignon primaire et un pignon secondaire engrenés l'un dans l'autre correspond à un rapport de démultiplication de la boîte de vitesses.

Cette boîte de vitesses est au point mort lorsqu'aucun pignon secondaire n'est solidarisé à l'arbre secondaire, et elle est en prise lorsque l'un des pignons secondaires est solidarisé en rotation à l'arbre secondaire, plusieurs pignons secondaires n'étant jamais solidarisés simultanément à l'arbre secondaire.

Un changement de rapport consiste à agir sur le synchroniseur du rapport qui est engagé pour désaccoupler de l'arbre secondaire le pignon secondaire correspondant, puis à agir sur le synchroniseur du rapport à engager pour solidariser à l'arbre secondaire le pignon secondaire correspondant.

Le synchroniseur associé à un pignon secondaire est situé sensiblement contre ce pignon le long de l'arbre secondaire. Il comprend un moyeu rigidement solidaire de l'arbre secondaire, entouré par un manchon qui est mobile en translation par rapport à ce moyeu le long de l'arbre secondaire, tout en étant lié en rotation à ce moyeu.

A cet effet, le moyeu et le manchon comprennent respectivement une denture externe et une denture interne complémentaires liant le manchon en rotation avec le moyeu tout en lui permettant de coulisser axialement.

Le manchon comprend un bord circulaire pourvu d'une denture de crabotage orientée axialement, cette denture de crabotage venant s'engager dans une denture de crabotage latérale correspondante du pignon lorsque le manchon est rapproché de ce pignon. L'enclenchement d'un rapport, ou crabotage, est réalisé par rapprochement du manchon contre le pignon pour engrener leurs dentures de crabotage mutuelles.

Le synchroniseur est également équipé d'une bague de synchronisation destinée à mettre le pignon secondaire à la même vitesse de rotation que l'arbre secondaire pendant que le manchon est rapproché du pignon secondaire, afin de faciliter le crabotage.

Cette bague de synchronisation a un diamètre externe identique au diamètre externe du moyeu, et elle comprend une denture périphérique prolongeant la denture externe du moyeu. Chaque dent de la denture périphérique a une forme de pointe orientée vers le moyeu fixe lorsque vue en coupe dans un plan parallèle à l'arbre secondaire.

La bague de synchronisation est accolée à un flanc du moyeu en étant liée en rotation à celui-ci, elle peut être écartée de ce flanc par le manchon mobile pour venir en appui contre une surface de frottement correspondante du pignon secondaire, telle qu'une surface de frottement conique.

Cette bague est aussi mobile angulairement par rapport au moyeu selon un faible jeu angulaire valant sensiblement un quart de pas de denture. Elle peut ainsi occuper, par rapport au moyeu, soit une position angulaire d'opposition au déplacement du manchon mobile, soit une position angulaire de libération dans laquelle elle permet au manchon de coulisser le long du moyeu.

En position d'opposition, la denture périphérique de la bague est décalée angulairement par rapport à la denture externe du moyeu. En position de libération, ces deux dentures coïncident en étant alignées.

Lorsque le manchon mobile est déplacé pour engager un rapport, la bague de synchronisation est d'abord déplacée axialement par ce manchon jusqu'à venir en appui contre la surface de frottement du pignon secondaire.

Les efforts résultant des frottements du pignon secondaire contre cette bague placent celle-ci en position angulaire d'opposition au déplacement du manchon mobile, en même temps qu'ils mettent progressivement le pignon secondaire à la même vitesse de rotation que le moyeu, c'est-à-dire que l'arbre primaire.

Lorsque la synchronisation est effectuée, les efforts de frottement de la bague contre le pignon s'annulent, ce qui permet à cette bague de se placer en position angulaire de libération sur déplacement du manchon pour permettre à ce manchon de venir en appui contre le flanc du pignon afin de craboter ce pignon secondaire.

Dans une boîte de vitesses manuelle pilotée, le manchon de chaque synchroniseur est déplacé par un actionneur, par l'intermédiaire d'une fourchette qui est mobile en translation parallèlement à l'arbre secondaire en étant solidaire de ce manchon en translation.

Lorsque le conducteur demande un changement de rapport, une unité de commande pilote un actionneur pour désengager d'abord le rapport qui est engagé, en déplaçant le manchon du synchroniseur correspondant, puis pour engager un autre rapport en déplaçant le manchon du synchroniseur correspondant à cet autre rapport.

Afin d'assurer que les changements de rapports soient effectués dans des conditions acceptables de confort, l'unité de commande déplace les actionneurs dans des temps qui doivent être les plus courts possibles, ces déplacements étant contrôlés par un ou plusieurs capteurs de déplacement relié à l'unité de commande.

Cependant, les boîtes de vitesses manuelles pilotées connues offrent une maîtrise des déplacements des actionneurs qui s'avère insuffisante, et qui provoque des engagements de rapports en viol de synchronisation, c'est-à-dire des crabotages sous vitesses différentielles. Il s'ensuit notamment une détérioration des dentures de crabotage qui rend la durée de vie de ces boîtes de vitesses insuffisante.

On connaît, notamment du document EP1271010A, un procédé de commande pour engager un rapport dans une boîte de vitesses comprenant un synchroniseur incluant un manchon mobile, un actionneur apte à déplacer ce manchon mobile pour engager un rapport, un capteur de position de l'actionneur, un capteur d'effort apte à délivrer un signal représentatif de l'effort appliqué par l'actionneur au manchon mobile, ladite boite comprenant une unité de commande de l'actionneur reliée au capteur de position et au capteur d'effort pour piloter l'actionneur selon un asservissement en vitesse durant une première phase qui est une phase d'approche, puis selon un asservissement en effort durant une deuxième phase qui est une phase de synchronisation, et à piloter l'actionneur selon un asservissement en vitesse durant une troisième phase qui est une phase de crabotage.

De plus, il est connu du document US 6 705 175 une boîte de vitesses dans laquelle l'actionneur est un vérin à double effet comprenant une première et une seconde chambres de compression, et dans laquelle le capteur d'effort comprend deux capteurs de pression pour délivrer un signal représentatif d'une différence de pression entre la première et la seconde chambre de compression..

Le but de l'invention est de proposer un procédé de commande d'une boîte de vitesses manuelle pilotée dans laquelle les changements de rapports sont facilités et plus précis.

A cet effet, l'invention a pour objet un procédé de commande pour engager un rapport dans une boîte de vitesses conforme à la partie caractérisante de la revendication 1.

L'invention sera maintenant décrite plus en détail, et en référence aux dessins annexés qui en illustrent une forme de réalisation à titre d'exemple non limitatif.
La figure 1 est une représentation symbolique partielle d'une boîte de vitesses manuelle pilotée selon l'invention ;
La figure 2 est une représentation symbolique partielle d'une autre boîte de vitesse manuelle pilotée selon l'invention ;
La figure 3 est un graphe comprenant une courbe représentative du déplacement d'un manchon durant l'engagement d'un rapport ;
La figure 4 est un graphe comprenant deux courbes représentatives des pressions dans un vérin à double effet d'un actionneur d'une boîte de vitesses selon l'invention durant l'engagement d'un rapport ;
La figure 5 est un graphe comprenant une courbe représentative de la vitesse de rotation de l'arbre primaire d'une boîte de vitesses selon l'invention durant les trois phases principales d'engagement d'un rapport.

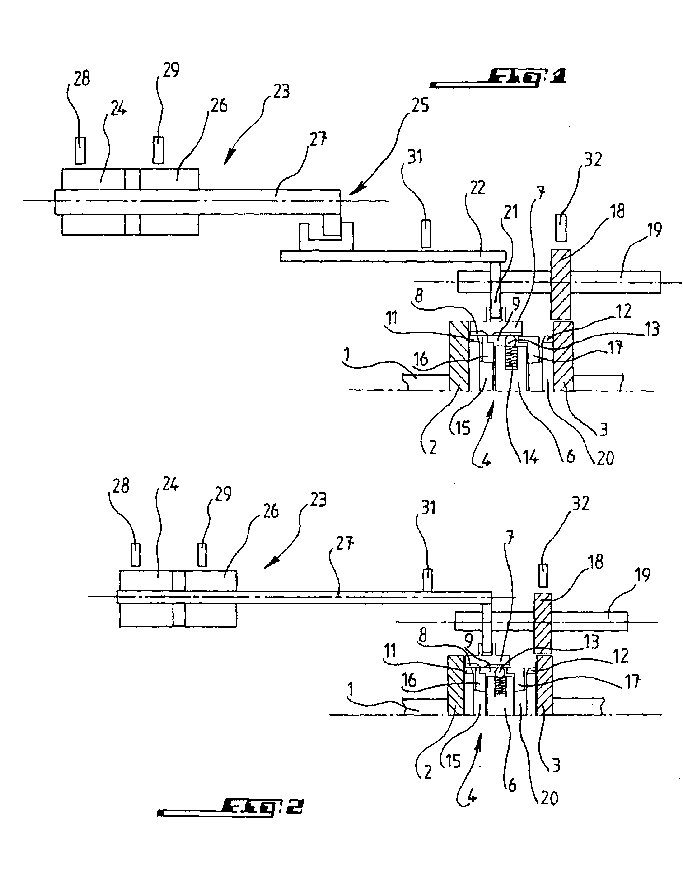

Dans la figure 1, une boîte de vitesses manuelle pilotée comprend un arbre secondaire 1 portant deux pignons secondaires 2 et 3 séparés l'un de l'autre le long de cet arbre secondaire par un synchroniseur double 4. Ce synchroniseur double 4 comprend un unique moyeu 6 rigidement solidaire de l'arbre secondaire 1, et un unique manchon mobile 7 entourant le moyeu 6, ce manchon mobile étant apte à être déplacé le long de l'arbre secondaire 1 tout en étant lié en rotation au moyeu 6.

Le manchon mobile 7 comprend une denture interne 8 qui s'étend d'un bord périphérique à l'autre de ce manchon, le moyeu 6 comprenant une denture externe complémentaire 9 qui permet à ce manchon d'être mobile longitudinalement par rapport au moyeu tout en étant lié en rotation à celui-ci.

Les extrémités des dents de la denture interne 8 au niveau de chaque bord circulaire de ce manchon mobile 7 constituent deux dentures de crabotage.

Dans l'exemple de la figure 1, le manchon 7 est en appui contre le pignon secondaire 2 qui est situé à gauche sur la figure, en ayant l'extrémité gauche de sa denture interne 8 engagée dans une denture de crabotage 11 de ce pignon 2, ce qui signifie que ce manchon 7 est craboté avec le pignon secondaire 2.

Le pignon secondaire 3 qui est situé à droite sur la figure comprend également une denture de crabotage 12 située en vis-à-vis du manchon mobile 7, de sorte que ce manchon mobile est apte à craboter le pignon secondaire de droite s'il est déplacé vers la droite sur la figure jusqu'à venir en appui contre ce pignon 3.

Comme représenté très symboliquement sur la figure 1, le moyeu 6 porte également une bille 13 et un ressort 14 qui comprime cette bille radialement contre une surface interne du manchon notamment pour indexer les mouvements du manchon mobile.

Deux bagues de synchronisations repérées par 16 et 17 sont plaquées à chaque flanc du moyeu 6 dont elles sont solidaires en rotation. Ces bagues 16 et 17 assurent la synchronisation durant l'accouplement respectivement du pignon secondaire repéré par 2 et du pignon secondaire repéré par 3, en venant en appui sur des surfaces de frottements de ces pignons, repérées respectivement par 15 et 20.

Chaque bague de synchronisation 16, 17, comprend une denture périphérique, et est apte à pivoter angulairement par rapport au moyeu d'un certain jeu valant sensiblement un quart de pas de denture, pour occuper soit une position angulaire d'opposition au passage du manchon mobile, soit une position angulaire de libération.

Dans l'exemple représenté sur la figure 1, le pignon secondaire 3 situé à droite est engrené avec un pignon primaire 18 porté par un arbre primaire 19. Le pignon 2 situé à gauche est engrené avec un autre pignon non représenté.

Le manchon est entraîné en translation au moyen d'une fourchette 21 portée par une tige 22 déplaçable parallèlement aux arbres primaire et secondaire. Cette tige 22 est liée en mouvement à un actionneur qui est ici un vérin à double effet repéré par 23, par une liaison mécanique repérée par 25.

Le vérin à double effet 23 comprend une première chambre de compression 24 et une seconde chambre de compression 26 aptes à recevoir de l'huile sous pression pour déplacer une tige 27 vers la droite sur les figures lorsque la première chambre 24 reçoit de l'huile sous pression, et vers la gauche sur les figures lorsque de l'huile sous pression est injectée dans la seconde chambre 26.

Le vérin à double effet 23 est équipé de deux capteurs de pression 28 et 29 aptes à fournir respectivement des signaux indicatifs de la pression dans la première et la seconde chambre de compression. Ces deux capteurs sont avantageusement associés de façon à délivrer un signal unique correspondant à la différence de pression entre la première et la seconde chambre, c'est-à-dire représentatif de l'effort appliqué par l'actionneur 23 au manchon mobile 7.

Cette boîte de vitesses est également équipée d'un capteur de position de l'actionneur, repéré par 31, et d'un capteur de vitesse de rotation 32 de l'arbre primaire 19. La figure 2 illustre un autre exemple de boîte de vitesses similaire à celui de la figure 1, mais dans lequel la fourchette 21 est directement portée par la tige de vérin 27.

Les différents capteurs 28, 29, 31, 32 sont reliés à une unité de commande non représentée qui pilote l'actionneur 23 pour le déplacer, lorsque le conducteur du véhicule demande un changement de rapport.

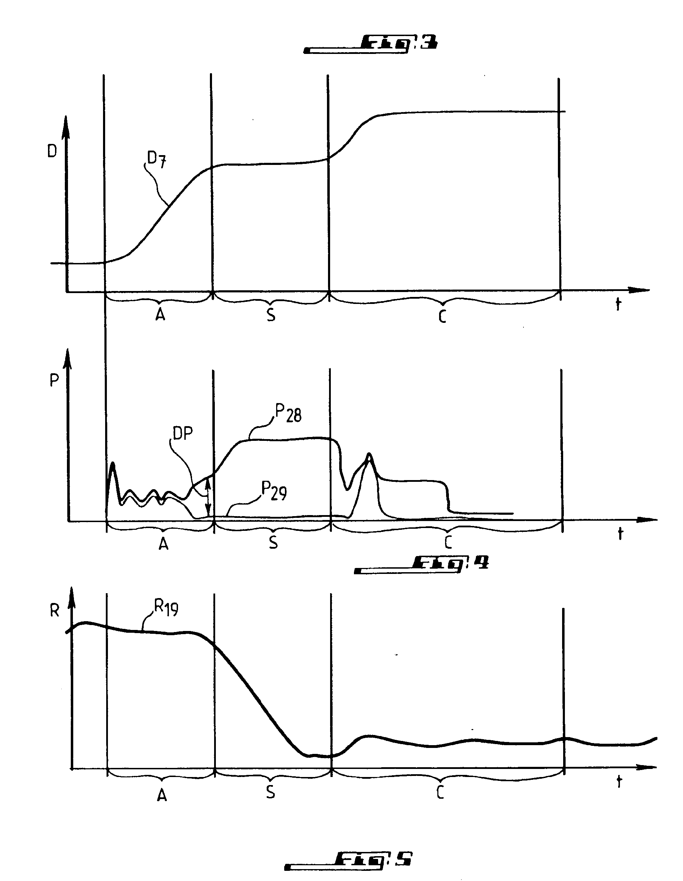

L'engagement d'un rapport consiste à déplacer le manchon 7 selon une séquence qui se décompose principalement en une phase d'approche, une phase de synchronisation, et une phase de crabotage, qui sont repérées respectivement par A, S et C sur les figures 3 à 5. En considérant le crabotage du pignon secondaire repéré par 2 sur les figures, ces phases se décomposent comme suit :

Durant la phase A d'approche, le manchon 7 est déplacé axialement pour rapprocher la bague de synchronisation 16 du pignon secondaire 2 à craboter. La bague de synchronisation 16 est écartée du moyeu 6 par le manchon 7 au moyen de billes non représentées, portées par le manchon, et qui sont comprimées par des ressorts radiaux sur des rampes d'armement de cette bague de synchronisation 16, ces rampes d'armement étant inclinées par rapport à l'arbre secondaire 1. Ceci assure que la bague de synchronisation 16 est déplacée axialement par le manchon 7 y compris si elle occupe une position angulaire de libération au début du mouvement.

Pendant la phase S de synchronisation, la bague de synchronisation 16 frotte contre la surface 15 du pignon 2, de sorte qu'elle occupe nécessairement une position angulaire d'opposition au déplacement du manchon 7, jusqu'à ce que la vitesse du pignon secondaire 2 soit identique à celle de l'arbre secondaire 1.

Durant la phase C de crabotage, le pignon secondaire 2 tourne sensiblement à la même vitesse que l'arbre secondaire 1, de sorte que la bague 16 n'est plus en frottement contre la surface 15. L'effort exercé par le manchon 7 sur la denture externe de la bague 16 est par conséquent suffisant pour faire passer cette bague 16 en position angulaire de libération, et permettre ainsi au manchon mobile 7 de se déplacer axialement pour s'engager dans la denture de crabotage 11 du pignon secondaire 2.

L'idée à la base de l'invention réside dans le constat selon lequel durant la phase de synchronisation, le manchon 7 ne se déplace que très faiblement le long de l'arbre secondaire 1 tant que le pignon secondaire n'a pas atteint la même vitesse que l'arbre secondaire 1.

Durant la phase de synchronisation, le manchon 7 est en appui contre les dents périphériques de la bague 16 qui sont en position angulaire d'opposition. Si l'effort appliqué par l'actionneur 23 augmente de façon trop importante, l'effort appliqué par le manchon 7 aux dents périphériques de la bague 16 peut provoquer la rotation de cette bague 16 vers sa position de libération avant que le pignon secondaire n'ait atteint la vitesse de rotation de l'arbre secondaire.

Dans ce cas, le manchon 7 glisse le long du moyeu 6 jusqu'à venir en appui contre le pignon secondaire, ce qui provoque un crabotage sous vitesses différentielles qui détériore les dentures de crabotage.

Conformément à l'invention, le capteur d'effort constitué par les capteurs de pression 28 et 29 permet de limiter l'effort appliqué par l'actionneur 23, en particulier durant la phase de synchronisation S, ce qui permet d'éviter un viol de synchronisation, sans pénaliser nécessairement le temps de changement de rapport.

Le capteur d'effort peut être exploité par l'unité de commande de différentes manières, dont l'une est représentée sur les figures 3 à 5.

Sur détection par l'unité de commande d'une demande d'engagement du rapport, émise par le conducteur, cette unité de commande pilote l'actionneur en phase d'approche A. Durant cette phase A d'approche, l'actionneur est piloté selon un asservissement en déplacement, pour se déplacer à une vitesse prédéterminée. Les déplacements du manchon 7 sont représentés par la courbe D7 de la figure 3, ces déplacements D étant sensiblement linéaires durant la phase d'approche S.

En fin de phase d'approche, cette courbe D7 s'arrondit, ce qui est révélateur de la diminution de la vitesse de déplacement du manchon, correspondant à l'armement du synchroniseur, c'est-à-dire à la fin du déplacement de la bague de synchronisation 16 qui vient en appui contre la surface de frottement 15. Ceci se traduit par un effort plus important à vaincre pour déplacer le manchon mobile 7.

Cet accroissement d'effort est représenté en figure 4 par une augmentation de la différence DP entre les pressions P28 et P29 dans les première et deuxième chambres de compression du vérin 23.

Grâce au capteur d'effort, la fin de phase d'approche est identifiée par détection d'un accroissement de l'effort au-delà d'une valeur seuil prédéterminée. Cette identification peut avantageusement être complétée par détection d'une diminution de la vitesse de déplacement de l'actionneur en deçà d'une autre valeur seuil prédéterminée.

Dans les boîtes de vitesses manuelles pilotées connues, l'identification de la fin de la phase d'approche A est effectuée par détection d'une variation significative de la vitesse de l'arbre primaire. Mais ce critère s'avère trop peu précis, comme visible dans la figure 5 dans laquelle on a représenté la vitesse de rotation R19 de l'arbre primaire durant les phases A, S et C, et dans laquelle il est visible que la variation de vitesse de l'arbre primaire 1 se déroule en un temps relativement important alors que la variation des pressions P28 et P29 intervient dans un temps beaucoup plus court.

La fin de la phase d'approche A correspond sensiblement au début de la phase de synchronisation S. Mais le début de la phase de synchronisation S peut avantageusement être identifié de façon plus précise par détection à la fois d'une vitesse de déplacement de l'actionneur 23 inférieure à une valeur seuil, d'une valeur d'effort DP supérieure à une valeur seuil, et d'une variation significative de la vitesse R19 de l'arbre primaire 19.

Après détection du début de la phase de synchronisation, l'unité de commande pilote l'actionneur 23 selon un asservissement en effort. En d'autres termes, l'actionneur est piloté pour appliquer au manchon 7 un effort restant inférieur à une valeur maximale prédéterminée, bien que ce manchon 7 ne se déplace pas.

Ceci se traduit en figure 4 par un palier horizontal de la courbe de pression P28 dans la première chambre de compression. Avantageusement, l'effort appliqué est modulé en fonction de la performance désirée, c'est-à-dire que l'effort appliqué par l'actionneur durant la phase de synchronisation S doit être choisi d'autant plus élevé que le temps de changement de rapport doit être court.

Durant cette phase de synchronisation, la phase d'armement est achevée, le manchon 7 est bloqué en position par le synchroniseur, c'est-à-dire par la denture périphérique de la bague 16, tant que la vitesse du pignon secondaire 2, et donc de l'arbre primaire 19, n'est pas synchronisée avec celle de l'arbre secondaire 1.

En fin de phase S de synchronisation, c'est-à-dire en début de phase de crabotage C, le manchon est automatiquement libéré par le synchroniseur 4 et tend à se déplacer vers le pignon secondaire 2 pour le craboter.

Le début de la phase de crabotage est identifié par détection, au moyen du capteur 31, du déplacement du manchon 7 le long de l'arbre secondaire 1.

Après détection du début de crabotage, l'unité de commande pilote l'actionneur 23 selon un asservissement en déplacement, c'est-à-dire pour qu'il se déplace vers le pignon secondaire à une certaine vitesse.

Cette vitesse est choisie à partir de la vitesse de déplacement de l'actionneur telle que mesurée par le capteur 31, et à partir de la valeur de l'effort qui était appliqué par l'actionneur 23 au manchon 7.

Il faut noter que cette phase de crabotage se décompose en une phase dite de vol libre durant laquelle l'actionneur 23 ne demande pas d'effort important pour être déplacé, suivie d'une phase de crabotage en tant que tel, durant laquelle la denture de crabotage 8 du manchon 7 s'engage dans la denture de crabotage correspondante 11 du pignon secondaire 2.

Durant la phase de crabotage en tant que tel, il est possible que le manchon rencontre un obstacle comme par exemple un contact dent sur dent avec la denture de crabotage 11 du pignon secondaire 2. Afin de faciliter cette phase de crabotage, le pilotage en déplacement est combiné avec une pression minimale dans l'actionneur 23.

L'invention présente ainsi l'avantage de permettre une meilleure détection des phases grâce à la mise en oeuvre d'un capteur d'effort en complément du ou des capteurs de déplacements usuels. Elle permet en outre de faciliter la synchronisation en pilotant directement l'effort de synchronisation à travers l'actionneur 23.

La commande permet d'approcher le synchroniseur comme le ferait le conducteur d'un véhicule équipé d'une boîte manuelle mécanique. Plus particulièrement, c'est le synchroniseur qui arête l'actionneur, et non pas l'unité de commande qui décide à elle seule de l'arrêt de l'actionneur.

## Revendications

1. Procédé de commande pour engager un rapport dans une boîte de vitesses comprenant un synchroniseur (4) incluant un manchon mobile (7), un vérin (23) à double (23) effet comprenant une première et une seconde chambres de compression (24, 26), un capteur d'effort (28, 29) comprenant deux capteurs de pression (28, 29) pour délivrer un signal représentatif d'une différence de pression entre la première et la seconde chambre de compression (24, 26), ledit vérin étant apte à déplacer ce manchon mobile (7) pour engager un rapport, un capteur de position (31) du vérin (23), ladite boîte comprenant une unité de commande du vérin reliée au capteur de position (31) et au capteur d'effort (28, 29) pour piloter le vérin successivement selon une consigne de vitesse, d'effort, et de vitesse, ledit procédé consistant à piloter le vérin (23) selon un asservissement en vitesse durant une première phase (A) qui est une phase d'approche, puis selon un asservissement en effort durant une deuxième phase (S) qui est une phase de synchronisation, et à piloter ce vérin (23) selon un asservissement en vitesse durant une troisième phase (C) qui est une phase de crabotage,
le pilotage du vérin (23) selon un asservissement en effort pour la deuxième phase (S) étant débuté sur détection d'une augmentation de l'effort appliqué par le vérin (23) au-delà d'une valeur seuil prédéterminée et d'une diminution de la vitesse de déplacement du vérin en deçà d'une autre valeur seuil prédéterminée.

2. Procédé de commande selon la revendication 1, dans lequel le pilotage du vérin (23) selon un asservissement en effort pour la deuxième phase (S) est débuté en outre sur détection d'une variation significative de la vitesse (R19) de l'arbre primaire (19) de la boîte de vitesses.

3. Procédé de commande selon l'une des revendications 1 ou 2, consistant à débuter le pilotage du vérin (23) selon un asservissement en vitesse, pour la troisième phase (C), sur détection d'une augmentation de la vitesse de déplacement au-delà d'une valeur seuil prédéterminée.

4. Procédé de commande selon la revendication 3, dans lequel durant la troisième phase, le pilotage en déplacement est combiné avec une pression minimale dans le vérin.

## Patentansprüche

1. Steuerverfahren zum Einrücken eines Gangs in einem Schaltgetriebe, das eine Synchronisierungskupplungsnabe (4) aufweist, die eine bewegliche Hülse (7) enthält, einen doppelt wirkenden Zylinder (23), der eine erste und eine zweite Verdichtungskammer (24, 26) aufweist, einen Kraftsensor (28, 29), der zwei Drucksensoren (28, 29) aufweist, um ein Signal zu liefern, das für einen Druckunterschied zwischen der ersten und der zweiten Verdichtungskammer (24, 26) repräsentativ ist, wobei der Zylinder geeignet ist, um diese bewegliche Hülse (7) zu verlagern, um einen Gang einzurücken, einen Positionssensor (31) des Zylinders (23), wobei das Getriebe eine Steuereinheit des Zylinders aufweist, die mit dem Positionssensor (31) und mit dem Kraftsensor (28, 29) verbunden ist, um den Zylinder nacheinander gemäß einem Drehzahl-, Kraft- und Geschwindigkeitssollwert zu steuern, wobei das Verfahren darin besteht, den Zylinder (23) gemäß einer Drehzahlregelung während einer ersten Phase (A), die eine Annäherungsphase ist, zu steuern, dann nach einer Kraftregelung während einer zweiten Phase (S), die eine Synchronisationsphase ist, und diesen Zylinder (23) gemäß einer Geschwindigkeitsregelung während einer dritten Phase (C), die eine Klauenkupplungsphase ist, zu steuern,
wobei das Steuern des Zylinders (23) gemäß einer Kraftregelung für die zweite Phase (S) beim Erfassen einer Erhöhung der Kraft, die von dem Zylinder (23) über einen vorbestimmten Schwellenwert hinaus angelegt wird, und einer Verringerung der Bewegungsgeschwindigkeit des Zylinders unterhalb eines weiteren vorbestimmten Schwellenwerts, begonnen wird.

2. Steuerverfahren nach Anspruch 1, bei dem das Steuern des Zylinders (23) gemäß einer Kraftregelung für die zweite Phase (S) ferner beim Erfassen einer signifikanten Variation der Drehzahl (R19) der Hauptwelle (19) des Schaltgetriebes begonnen wird.

3. Steuerverfahren nach einem der Ansprüche 1 oder 2, das darin besteht, das Steuern des Zylinders (23) gemäß einer Geschwindigkeitsregelung für die dritte Phase (C) beim Erfassen einer Erhöhung der Bewegungsgeschwindigkeit dieses über einen vorbestimmten Schwellenwert hinaus zu beginnen.

4. Steuerverfahren nach Anspruch 3, bei dem das Bewegungssteuern während der dritten Phase mit einem Mindestdruck in dem Zylinder kombiniert ist.

## Claims

1. A control method for engaging a gear in a gearbox comprising a synchroniser (4) including a mobile sleeve (7), a double-acting jack (23) comprising a first and a second compression chamber (24, 26), a force sensor (28, 29) comprising two pressure sensors (28, 29) to deliver a representative signal of a pressure difference between the first and the second compression chamber (24, 26), the said jack being able to displace this mobile sleeve (7) to engage a gear, a position sensor (31) of the jack (23), the said box comprising a control unit of the jack connected to the position sensor (31) and to the force sensor (28, 29) to guide the jack successively according to a setpoint for speed, force, and speed, the said method consisting of guiding the jack (23) according to a speed control during a first phase (A) which is an approach phase, then according to a force control during a second phase (S) which is a synchronisation phase, and of guiding this jack (23) according to a speed control during a third phase (C) which is a dog-clutching phase, the guiding of the jack (23) according to a force control for the second phase (S) being started on detection of an increase in the force applied by the jack (23) beyond a predetermined threshold value and a reduction in the speed of movement of the jack below another predetermined threshold value.

2. The control method according to Claim 1, in which the guiding of the jack (23) according to a force control for the second phase (S) is started in addition on detection of a significant variation of the speed (R19) of the main shaft (19) of the gearbox.

3. The control method according to one of Claims 1 or 2, consisting in starting the guidance of the jack (23) according to a speed control, for the third phase (C), on detection of an increase in the speed of movement beyond a predetermined threshold value.

4. The control method according to Claim 3, in which during the third phase the guidance in movement is combined with a minimal pressure in the jack.
